# FASCICULE DE BREVET EUROPEEN

(11) **EP 3 172 119 B1**
(45) Date de publication et mention de la délivrance du brevet: **13.03.2019**
(21) Numéro de dépôt: 15753391.0
(22) Date de dépôt: 10.07.2015
(51) Int. Cl.: B62D 29/04

(54) **PROCÉDÉ DE FABRICATION D'UN ENSEMBLE EN MATIÈRE PLASTIQUE**
VERFAHREN ZUR HERSTELLUNG EINER ANORDNUNG AUS KUNSTSTOFF
METHOD FOR MANUFACTURING AN ASSEMBLY MADE OF PLASTIC

(30) Priorité: 21.07.2014 FR 1457019
(43) Date de publication de la demande: 31.05.2017
(73) Titulaire: NOVARES FRANCE, 92140 Clamart (FR)
(72) Inventeur: NICOLETTI, Franciane, 01100 Bellignat (FR); ROUVIERE, Christophe, 01250 Revonnas (FR); REVEL, Anthony, 01800 Villieu Loyes Mollon (FR)
(74) Mandataire: Delorme, Nicolas
(86) Numéro de dépôt international: PCT/FR2015/051920
(87) Numéro de publication internationale: WO 2016/012692

(56) Documents cités:
- EP-A2- 0 251 546
- EP-A2- 2 636 578
- DE-A1-102008 032 344
- DE-A1-102008 035 918

## Description

La présente invention concerne un procédé de fabrication d'une pièce automobile en matière plastique et concerne un ensemble transitoire pour la fabrication d'une pièce automobile en matière plastique.

Il est connu, dans l'industrie automobile, notamment pour des pièces de grandes dimensions, d'assembler des éléments d'aspect sur des éléments de structure.

Par ailleurs, le document DE 10 2008 035918 A1 divulgue un procédé de fabrication d'une pièce automobile en matière plastique qui comprend un élément de structure et un élément d'aspect, le procédé de fabrication comprenant en outre les étapes prévoyant de:
- fournir un élément de structure présentant une zone de collage ;
- fournir un élément d'aspect présentant une zone de collage ;
- déposer un cordon de colle structurelle sur au moins une zone de collage de l'élément de structure ou sur au moins une zone de collage de l'élément d'aspect; et
- polymériser le cordon de colle structurelle.

Traditionnellement, les éléments de structure sont réalisés dans des matériaux choisis pour leurs qualités mécaniques. Ainsi, il est rare que les éléments de structure présentent un état de surface esthétique. Les éléments de structure sont donc souvent recouverts d'un élément d'aspect qui présente une forme et une finition adaptées à l'esthétique du véhicule.

Il est connu de coller les éléments de structure et d'aspect en utilisant deux colles différentes.

Une colle, dite colle structurelle, permet la fixation pérenne de l'élément d'aspect à l'élément de structure.

Une colle, dite colle de pré-maintien, permet l'assemblage temporaire de l'élément d'aspect et de l'élément de structure, le temps que la colle structurelle polymérise.

Cette méthode de fixation nécessite la préparation de deux surfaces de collage distinctes, et l'usage de deux colles différentes, ce qui s'avère onéreux.

De plus, il est possible que la colle de pré-maintien ne conserve pas l'intégralité de l'assemblage des deux éléments, jusqu'à la polymérisation complète de la colle structurelle.

Dans ce contexte technique, un but de la présente invention est de fournir un procédé de fabrication d'une pièce automobile en matière plastique qui garantisse la pérennité de l'assemblage de l'élément d'aspect avec l'élément de structure durant la polymérisation de la colle structurelle.

Un autre but de la présente invention est de réduire les coûts liés à la fixation de l'élément d'aspect à l'élément de structure.

Selon une définition générale, l'invention propose un procédé de fabrication d'une pièce automobile en matière plastique qui comprend un élément de structure et un élément d'aspect. Le procédé de fabrication comprend les étapes prévoyant de :
I. Fournir un élément de structure présentant des moyens d'assemblage et au moins une zone de collage ;
II. Fournir un élément d'aspect présentant des moyens d'assemblage et au moins une zone de collage ;
III. Déposer un cordon de colle structurelle sur au moins une zone de collage de l'élément de structure et/ou sur au moins une zone de collage de l'élément d'aspect ;
IV. Solidariser l'élément de structure et l'élément d'aspect par un assemblage mécanique des moyens d'assemblage ;
V. Polymériser le cordon de colle structurelle ;
VI. Découper les moyens d'assemblages.

L'invention propose donc un procédé permettant de fabriquer une pièce automobile, qui garantit l'assemblage de l'élément d'aspect avec l'élément de structure durant la polymérisation de la colle structurelle.

En effet, l'assemblage mécanique des moyens d'assemblage permet la fixation de la pièce automobile en matière plastique durant la polymérisation du cordon de colle structurelle.

De plus, le procédé selon l'invention permet de réduire les coûts liés à la fixation de l'élément d'aspect à l'élément de structure. En effet, l'assemblage mécanique des moyens d'assemblage permet au procédé selon l'invention de s'affranchir de l'usage d'une colle supplémentaire et de la préparation d'une zone de collage supplémentaire.

En outre, l'étape de découpe des moyens d'assemblage affranchit le positionnement des moyens d'assemblage des contraintes d'aspect de la pièce automobile en matière plastique. Les moyens d'assemblage peuvent ainsi être positionnés de manière à réduire les coûts de conception de l'élément de structure et de l'élément d'aspect.

De manière préférentielle, les moyens d'assemblage présentent des moyens de centrage, et l'étape IV qui prévoit de solidariser l'élément de structure et l'élément d'aspect par un assemblage mécanique des moyens d'assemblage comprend des étapes de :
IV.1. Positionnement, avec les moyens de centrage, de l'élément d'aspect par rapport à l'élément de structure ;
IV.2. Mise en contact de la zone de collage de l'élément d'aspect avec la zone de collage de l'élément de structure ;
IV.3. Fixation de l'élément de structure avec l'élément d'aspect par l'assemblage mécanique des moyens d'assemblage de l'élément de structure avec les moyens d'assemblage de l'élément d'aspect.

Ainsi, le positionnement avec les moyens de centrage de l'élément d'aspect par rapport à l'élément de structure permet de faciliter et de garantir le positionnement correct de l'élément d'aspect par rapport à l'élément de structure.

Cette disposition technique permet d'augmenter la fiabilité et la rapidité du procédé selon l'invention.

De manière préférentielle, l'étape I qui prévoit de fournir un élément de structure qui présente des moyens d'assemblage et, au moins, une zone de collage, comprend une phase d'injection de l'élément de structure.

L'injection de l'élément de structure permet de fabriquer ce dernier à moindres coûts. En outre, l'injection de l'élément de structure peut permettre de réaliser en une seule opération, l'élément de structure comprenant des moyens d'assemblage et une zone de collage.

De plus, l'étape II prévoyant de fournir un élément d'aspect qui présente des moyens d'assemblage et au moins une zone de collage, comprend une phase d'injection de l'élément d'aspect dans laquelle une carotte d'injection débouche dans les moyens d'assemblage.

L'injection de l'élément d'aspect permet de fabriquer à coûts réduits un élément d'aspect présentant un état de surface optimal. De plus, l'injection de l'élément d'aspect par une carotte d'injection qui débouche dans les moyens d'assemblage permet de retirer la marque d'injection lors de la découpe des moyens d'assemblage.

L'invention porte également sur un ensemble transitoire pour la réalisation d'une pièce automobile en matière plastique.

L'ensemble transitoire comprend un élément de structure et un élément d'aspect, qui présentent chacun des moyens d'assemblage coopérant pour assurer l'assemblage de l'élément de structure avec l'élément d'aspect. Les moyens d'assemblage de l'élément de structure étant reliés à l'élément de structure par une zone d'appui et les moyens d'assemblage de l'élément d'aspect sont reliés à l'élément d'aspect par une zone de découpe.

Ainsi, l'ensemble transitoire selon l'invention est adapté pour aisément mettre en oeuvre, l'étape IV qui prévoit de solidariser les deux éléments par un assemblage mécanique des moyens d'assemblage, et l'étape VI qui prévoit le découpage des moyens d'assemblage.

En effet la zone de contre pression qui lie les moyens d'assemblage de l'élément de structure à l'élément de structure, permet le positionnement de butées lors de la découpe de la zone de découpe et de la zone de contre pression.

Selon un mode de réalisation, les moyens d'assemblage de l'élément d'aspect comprennent un biseau et les moyens d'assemblage de l'élément de structure comprennent une encoche, le biseau étant adapté pour être encliqueté dans l'encoche.

L'encliquetage permet l'assemblage rapide et durable de l'élément d'aspect et de l'élément de structure.

De plus les moyens d'encliquetage peuvent être aisément réalisés lors d'une fabrication par injection des éléments de structure et d'aspect. Les moyens d'encliquetage permettent donc la réalisation d'un assemblage mécanique fiable, de mise en oeuvre aisée et peu onéreux

Selon un autre mode de réalisation, les moyens d'assemblage de l'élément d'aspect et les moyens d'assemblage de l'élément de structure comprennent des éléments de visserie.

Les éléments de visserie permettent de combiner la fixation et le centrage des moyens d'assemblage.

L'élément d'aspect et l'élément de structure peuvent présenter chacun des moyens de centrage conçus pour coopérer.

Les moyens de centrage permettent de garantir le positionnement correct de l'élément d'aspect par rapport à l'élément de structure.

Selon un mode de réalisation, les moyens de centrage de l'élément d'aspect peuvent comprendre au moins un perçage, et les moyens de centrage de l'élément de structure comprennent au moins un pion de centrage adapté pour coopérer avec ledit au moins un perçage.

Selon l'invention, l'élément d'aspect et l'élément de structure présentent chacun au moins une zone de collage, ladite au moins une zone de collage de l'élément d'aspect étant conçue pour coopérer avec ladite au moins une zone de collage de l'élément de structure.

En outre, l'élément d'aspect peut comprendre au moins une languette élastique conçue pour exercer un effort sur une portion de l'élément d'aspect.

La languette élastique permet d'exercer un effort sur l'élément d'aspect qui contribue à maintenir la zone de collage de l'élément d'aspect en contact avec un cordon de colle structurelle déposé sur la zone de collage de l'élément de structure.

Pour sa bonne compréhension, l'invention est décrite en référence aux dessins ci-annexés représentant à titre d'exemples non limitatifs, plusieurs formes de réalisation, d'un ensemble en matière plastique selon l'invention.
- La figure 1 est une vue éclatée en perspective d'un ensemble transitoire selon l'invention ;
- La figure 2 est une vue éclatée en perspective des moyens d'assemblage et des moyens de centrage selon un premier mode de réalisation.
- La figure 3 est une vue en coupe AA d'un ensemble transitoire selon un premier mode de réalisation ;
- La figure 4 est une vue partielle en coupe BB d'une ensemble transitoire selon un premier mode de réalisation ;
- La figure 5 est une vue en perspective de moyens d'assemblage selon un second mode de réalisation ;
- La figure 6 est une vue partielle en coupe CC d'une ensemble en transitoire selon un second mode de réalisation ;
- La figure 7 est une vue en coupe d'un ensemble transitoire selon un second mode de réalisation ;
- La figure 8 est une vue partiel en coupe BB du découpage des moyens d'assemblage.

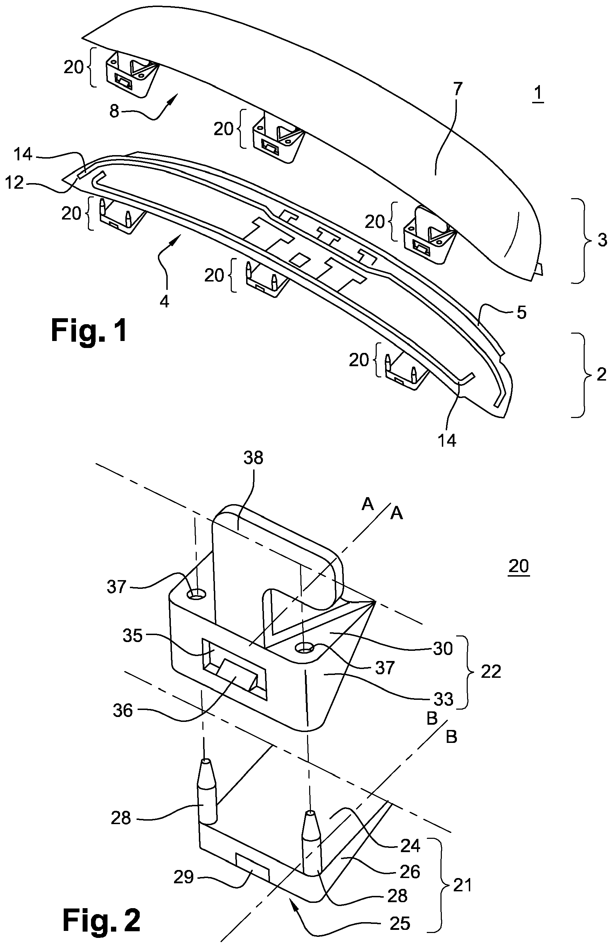

Comme on peut l'apprécier sur la figure 1, l'invention propose un ensemble transitoire 1 pour la fabrication d'une pièce automobile en matière plastique.

L'ensemble transitoire 1 comprend un élément de structure 2 et un élément d'aspect 3.

Selon le mode de réalisation ici présenté, l'ensemble transitoire 1 est destiné à être intégré à un toit d'un véhicule non représenté ici.

Ainsi, l'élément de structure 2 présente ici une forme oblongue, une surface concave 4 et une surface convexe 5.

La surface convexe 5 est destinée à être fixée à l'élément d'aspect 3.

L'élément d'aspect 3 présente une surface externe 7 et une surface interne 8. La surface interne 8 est conçue pour être fixée sur la surface convexe 5.

En outre, selon le mode de réalisation ici présenté, l'élément de structure 2 et l'élément d'aspect 3 présentent chacun, sur une de leurs bordures respectives, trois dispositifs de maintien 20 qui seront détaillés ci-après.

Comme on peut le voir sur la figure 1, la surface convexe 5 présente une zone de collage 12 adaptée pour recevoir un cordon de colle structurelle 14.

De même, la surface interne 8 présente une zone de collage 15 adaptée pour être collée par le cordon de colle structurelle 14.

Le cordon de colle structurelle 14 permet la fixation définitive de l'élément d'aspect 3 à l'élément de structure 2.

Selon un premier mode de réalisation illustré par la figure 2, chaque dispositif de maintien 20 comprend un organe de support 21 et un organe encliquetable 22.

De manière préférentielle l'organe de support 21 est fixé à l'élément de structure 2 et l'organe encliquetable 22 est fixé à l'élément d'aspect 3.

Selon le premier mode de réalisation, l'organe de support 21 présente une géométrie prismatique comprenant, une face supérieure 24, une face inférieure 25 et une épaisseur 26.

La face supérieure 24 comprend deux pions de centrage 28.

Une encoche 29 est ménagée dans l'épaisseur 26.

Selon le même mode de réalisation, l'organe encliquetable 22 présente une géométrie prismatique creuse comprenant une face extérieure 30, une face intérieure 31 et un flanc 33.

Le flanc 33 présente une fenêtre 35 dont un bord comprend un biseau 36.

La fenêtre 35 et le biseau 36 sont conçus pour être encliquetables avec l'encoche 29.

La surface extérieure 30 présente deux perçages 37 adaptés pour recevoir chacun un pion de centrage 28.

En outre, la surface extérieure 30 peut comprendre une carotte d'injection 38.

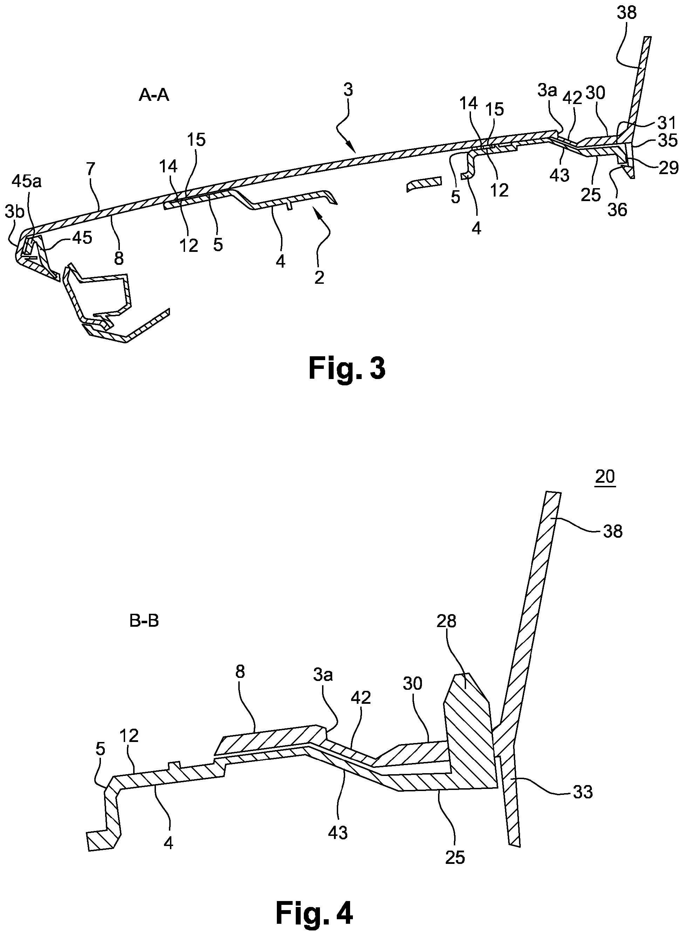

En référence aux figures 3 et 4, l'organe encliquetable 22 est lié à une première bordure 3a de l'élément d'aspect 3 par une portion de matière d'épaisseur réduite qui définit une zone de découpe 42.

De même, l'organe de support 21 est lié l'élément de structure 2 par une portion plane d'épaisseur réduite, qui définit une zone d'appui 43.

Comme on peut le voir sur la figure 3 une seconde bordure 3b de l'élément d'aspect présente un retour concave.

Une languette élastique 45 peut être positionnée entre un élément du véhicule et la seconde bordure 3b de l'élément d'aspect.

Selon le premier mode de réalisation illustré par la figure 3, la languette élastique 45 comprend une première extrémité 45a recourbée et conçue pour être positionnée au fond du retour concave de la seconde bordure 3b. La languette élastique 45, en matière plastique souple, comprend aussi une seconde extrémité adaptée pour être liée à un élément du véhicule.

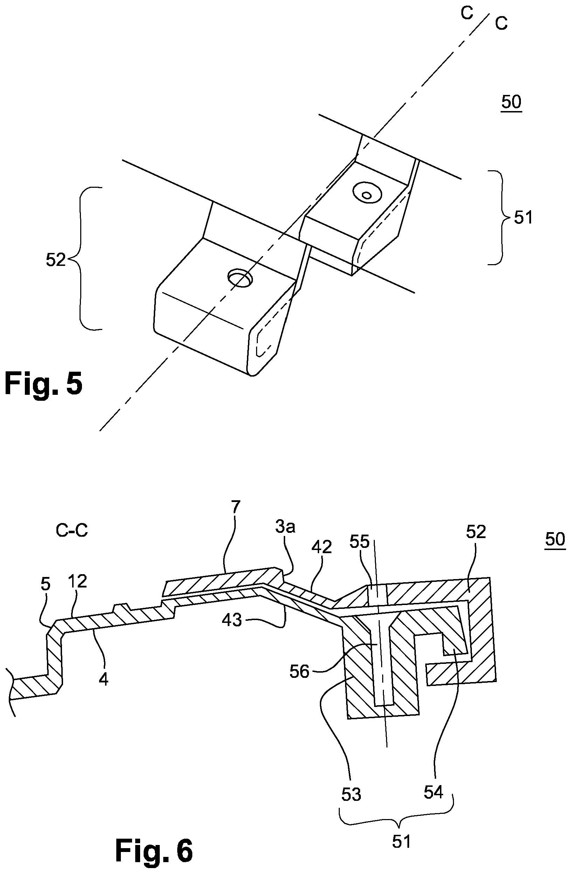

Les figures 5, 6 et 7 présentent un second mode de réalisation de l'ensemble transitoire 1.

Selon ce mode de réalisation, le dispositif de maintien 50 visible sur la figure 5 comprend un organe male 51 et un organe femelle 52.

L'organe femelle 52 est fixé à l'élément d'aspect 3 et l'organe male 51 est fixé à l'élément d'aspect 2.

Comme on peut le voir en coupe CC sur la figure 6, l'organe femelle 52 présente une forme en U. Une paroi supérieure de l'organe femelle 52 comprend un perçage 55.

L'organe male 51 comprend un fût de vissage 53 et une patte 54. La patte 54 est adaptée pour être introduite dans la forme en U de l'organe femelle 52.

Le fût de vissage 53 présente un perçage 56

Lorsque la patte 54 de l'organe male est positionnée dans l'organe femelle 52, il est prévu que le perçage 55 de la paroi supérieure de l'organe femelle 52 et le perçage 56 du fût de vissage 53 soient coaxiaux pour autoriser l'assemblage de l'organe male 51 et de l'organe femelle 52 par vissage.

En outre, comme on peut le voir sur la figure 6, l'organe male 51 est lié à l'élément de structure 2 par une portion de matière d'épaisseur réduite qui définit une zone d'appui 43.

De même, l'organe femelle 52 est lié à une première bordure 3a de l'élément d'aspect 3 par une portion de matière d'épaisseur réduite qui définit une zone de découpe 42.

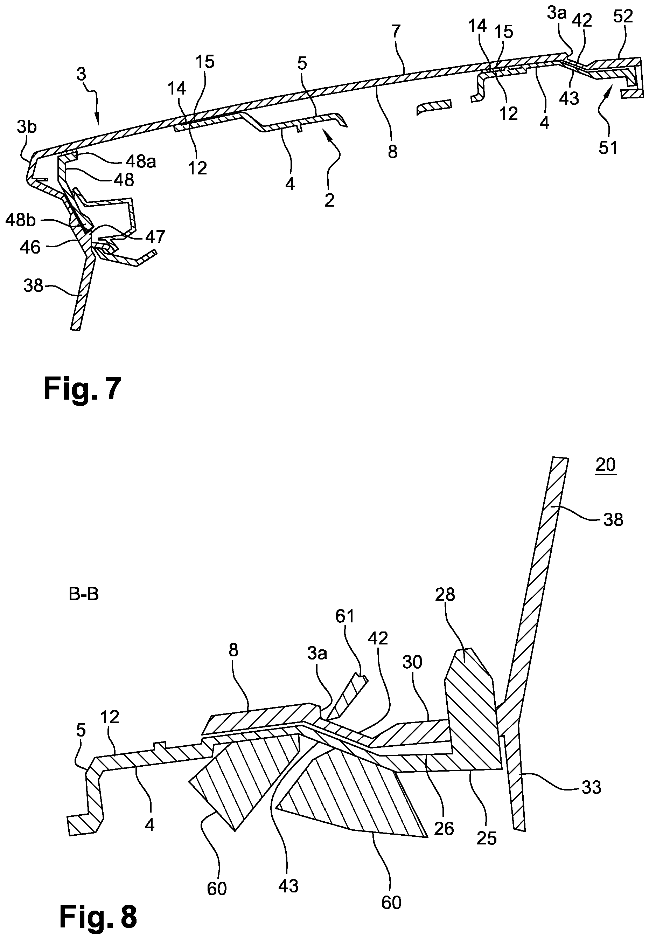

Tel que cela est représenté sur la figure 7, selon le second mode de réalisation ici présenté, la seconde bordure 3b de l'élément d'aspect 3 présente un retour concave prolongé par une portion rectiligne 46.

Une face interne de la portion rectiligne 46, orientée vers la face interne 8 de l'élément d'aspect 3, comprend une butée 47.

A proximité du retour concave, la portion rectiligne 46 présente une épaisseur réduite qui définit une zone de découpe 42.

De plus, la portion rectiligne 46 comprend une carotte d'injection 38.

Une languette élastique 48 peut être positionnée entre la butée 47 et la face interne 8.

La languette élastique 48 comprend une première extrémité 48a recourbée et conçue pour être positionnée contre la face interne 8. De plus, la languette élastique 48 comprend une seconde extrémité 48b adaptée pour être positionnée contre la butée 47.

Le procédé de fabrication d'une pièce automobile en matière plastique, utilisant un ensemble transitoire 1 est le suivant.

De manière préférentielle, l'élément d'aspect 3 est réalisé par injection plastique.

La zone de collage 12 de la face convexe 5 et la zone de collage 15 de la face interne 8 sont préparées à la réception du cordon de colle structurelle 14.

De manière préférentielle, le cordon de colle structurelle 14 est déposé sur la zone de collage 12 de la face convexe 5, comme on peut le voir sur les figure 1, 3 et 7.

Selon le mode de réalisation choisi, la languette élastique 45 est préparée pour prendre appui contre la seconde bordure 3b de l'élément d'aspect, ou la languette élastique 48 est coincée entre la butée 47 et la face interne 8.

L'élément d'aspect 3 est alors positionné, pour la zone de collage 15 de la face interne 8 soit en contact avec le cordon de colle structurel, et pour que chaque dispositif de maintien 20 ou 50 soit dans une position permettant l'assemblage.

Chaque dispositif de maintien 20 ou 50 est verrouillé.

Selon le premier mode de réalisation, l'organe encliquetable 22 est encliqueté sur l'organe de support 21.

Selon le second mode de réalisation, l'organe male 51 est positionné dans l'organe femelle 52. Une vis (non représentée) permet de fixer l'organe male 51 et l'organe femelle 52.

L'ensemble transitoire 1 est ensuite laissé au repos le temps nécessaire à la polymérisation du cordon de colle structurelle 14.

Durant la polymérisation du cordon de colle structurelle 14, chaque dispositif de maintien 20 ou 50 assure une fixation rigide et indéformable entre l'élément de structure 2 et l'élément d'aspect 3.

De plus, la languette élastique 45 ou 48 exerce un effort sur l'élément de d'aspect 3 qui permet d'augmenter le contact de la zone de collage 15 de la surface interne 8 avec le cordon de colle structurelle 14.

Lorsque le cordon de colle structurelle 14 est polymérisé, les zones de découpage 42 et les zones d'appui 43 peuvent être découpées.

Tel que cela est représenté sur la figure 8, des cales 60 peuvent être positionnées contre une zone d'appui 43. Un couteau 61 peut alors découper la zone de découpage 42 et la zone d'appui 43.

Cette disposition technique permet au procédé selon l'invention de fournir une pièce automobile en matière plastique dépouillée de chaque dispositif de maintien 20 ou 50. De plus, la découpe des zones de découpage 42 et des zones d'appui 43 permet le retrait des carottes d'injections 38.

Ainsi le procédé selon l'invention garantit l'assemblage de l'élément d'aspect avec l'élément de structure durant la polymérisation du cordon de colle structurelle, lors de la fabrication d'une pièce automobile en matière plastique.

De plus, le procédé selon l'invention permet de réduire les coûts liés à la fixation de l'élément d'aspect à l'élément de structure. En effet, l'assemblage des dispositifs de maintien permet au procédé selon l'invention de s'affranchir de l'usage d'une colle supplémentaire et de la préparation d'une zone de collage supplémentaire.

Comme il va de soi, l'invention ne se limite pas aux seules formes de réalisation décrites ci-dessus à titre d'exemples, elle embrasse au contraire toutes les variantes de réalisation.

## Revendications

1. Procédé de fabrication d'une pièce automobile en matière plastique qui comprend un élément de structure (2) et un élément d'aspect (3), le procédé de fabrication comprenant en outre les étapes prévoyant de :
I. Fournir un élément de structure (2) présentant des moyens d'assemblage et au moins une zone de collage (12) ;
II. Fournir un élément d'aspect (3) présentant des moyens d'assemblage et au moins une zone de collage (15) ;
III. Déposer un cordon de colle structurelle (14) sur au moins une zone de collage (12) de l'élément de structure (2) et/ou sur au moins une zone de collage (15) de l'élément d'aspect (3) ;
IV. Solidariser l'élément de structure (2) et l'élément d'aspect (3) par un assemblage mécanique des moyens d'assemblage ;
V. Polymériser le cordon de colle structurelle (14) ;
VI. Découper les moyens d'assemblages.

2. Procédé de fabrication selon la revendication 1, d'une pièce automobile en matière plastique dans laquelle les moyens d'assemblage présentent des moyens de centrage, **caractérisé en ce que** l'étape IV prévoyant de solidariser l'élément de structure (2) et l'élément d'aspect (3) par un assemblage mécanique des moyens d'assemblage comprend des étapes de :
IV.1. Positionnement, avec les moyens de centrage, de l'élément d'aspect (3) par rapport à l'élément de structure (2) ;
IV.2. Mise en contact de la zone de collage (15) de l'élément d'aspect (3) avec la zone de collage (12) de l'élément de structure (2) ;
IV.3. Fixation de l'élément de structure (2) avec l'élément d'aspect (3) par l'assemblage mécanique des moyens d'assemblage de l'élément de structure (2) avec les moyens d'assemblage de l'élément d'aspect (3).

3. Procédé de fabrication selon la revendication 1, **caractérisé en ce que** l'étape I prévoyant de fournir un élément de structure (2) présentant des moyens d'assemblage et au moins une zone de collage (12), comprend une phase d'injection de l'élément de structure (2).

4. Procédé de fabrication selon la revendication 1, **caractérisé en ce que** l'étape II prévoyant de fournir un élément d'aspect (3) présentant des moyens d'assemblage et au moins une zone de collage (15), comprend une phase d'injection de l'élément d'aspect (3), dans laquelle une carotte d'injection (38) débouche dans les moyens d'assemblage.

5. Ensemble transitoire (1) pour la réalisation d'une pièce automobile en matière plastique comprenant un élément de structure (2) et un élément d'aspect (3), présentant chacun des moyens d'assemblage coopérant pour assurer l'assemblage de l'élément de structure (2) avec l'élément d'aspect (3), les moyens d'assemblage de l'élément de structure (2) étant reliés à l'élément de structure (2) par une zone d'appui (43) et les moyens d'assemblage de l'élément d'aspect (3) sont reliés à l'élément d'aspect (3) par une zone de découpe (42), l'élément d'aspect (3) et l'élément de structure (2) présentent chacun au moins une zone de collage (12-15), ladite au moins une zone de collage (15) de l'élément d'aspect (3) étant conçue pour coopérer avec ladite au moins une zone de collage (12) de l'élément de structure (2).

6. Ensemble transitoire (1) selon la revendication 5, **caractérisé en ce que** les moyens d'assemblage de l'élément d'aspect (3) comprennent un biseau (36) et les moyens d'assemblage de l'élément de structure (2) comprennent une encoche (29), le biseau (36) étant adapté pour être encliqueté dans l'encoche (29).

7. Ensemble transitoire (1) selon la revendication 5, **caractérisé en ce que** les moyens d'assemblage de l'élément d'aspect (3) et les moyens d'assemblage de l'élément de structure (2) comprennent des éléments de visserie.

8. Ensemble transitoire (1) selon l'une des revendications 5 à 7, **caractérisé en ce que** l'élément d'aspect (3) et l'élément de structure (2) présentent chacun des moyens de centrage conçus pour coopérer.

9. Ensemble transitoire (1) selon la revendication 8, **caractérisé en ce que** les moyens de centrage de l'élément d'aspect (3) comprennent au moins un perçage (37), et les moyens de centrage de l'élément de structure (2) comprennent au moins un pion de centrage (28) adapté pour coopérer avec ledit au moins un perçage (37).

10. Ensemble transitoire (1) selon l'une des revendications 5 à 9, **caractérisé en ce que** l'élément d'aspect (3) comprend au moins une languette élastique (45-48) conçue pour exercer un effort sur une portion de l'élément d'aspect (3).

## Patentansprüche

1. Verfahren zur Herstellung eines Kraftfahrzeugteils aus Kunststoffmaterial, das ein Strukturelement (2) und ein Sichtelement (3) umfasst, wobei das Herstellungsverfahren weiter die Schritte umfasst, welche vorsehen:
I. ein Strukturelement (2) bereitzustellen, das Fügemittel und mindestens einen Verklebungsbereich (12) aufweist;
II. ein Sichtelement (3) bereitzustellen, das Fügemittel und mindestens einen Verklebungsbereich (15) aufweist;
III. einen Streifen Strukturklebstoff (14) auf mindestens einen Verklebungsbereich (12) des Strukturelements (2) und/oder auf mindestens einen Verklebungsbereich (15) des Sichtelements (3) aufzubringen;
IV. das Strukturelement (2) und das Sichtelement (3) durch ein mechanisches Fügen der Fügemittel fest zu verbinden;
V. den Streifen Strukturklebstoff (14) zu polymerisieren;
VI. die Fügemittel auszuschneiden.

2. Herstellungsverfahren eines Kraftfahrzeugteils aus Kunststoffmaterial nach Anspruch 1, bei dem die Fügemittel Zentriermittel aufweisen, **dadurch gekennzeichnet, dass** der Schritt IV, welcher vorsieht, das Strukturelement (2) und das Sichtelement (3) durch ein mechanisches Fügen der Fügemittel fest zu verbinden, Schritte umfasst des:
IV.1. Positionierens, mit den Zentriermitteln, des Sichtelements (3) in Bezug auf das Strukturelement (2);
IV.2. Inkontaktbringens des Verklebungsbereichs (15) des Sichtelements (3) mit dem Verklebungsbereich (12) des Strukturelements (2);
IV.3. Befestigens des Strukturelements (2) am Sichtelement (3) durch das mechanische Fügen der Fügemittel des Strukturelements (2) mit den Fügemitteln des Sichtelements (3).

3. Herstellungsverfahren nach Anspruch 1, **dadurch gekennzeichnet, dass** der Schritt I, welcher vorsieht, ein Strukturelement (2) bereitzustellen, das Fügemittel und mindestens einen Verklebungsbereich (12) aufweist, eine Phase des Spritzgießens des Strukturelements (2) umfasst.

4. Herstellungsverfahren nach Anspruch 1, **dadurch gekennzeichnet, dass** der Schritt II, welcher vorsieht, ein Sichtelement (3) bereitzustellen, das Fügemittel und mindestens einen Verklebungsbereich (15) aufweist, eine Phase des Spritzgießens des Sichtelements (3) umfasst, bei der ein Angießkanal (38) in den Fügemitteln mündet.

5. Vorläufige Anordnung (1) für die Ausführung eines Kraftfahrzeugteils aus Kunststoffmaterial, das ein Strukturelement (2) und ein Sichtelement (3) umfasst, welche jedes Fügemittel umfassen, die zusammenwirken, um das Fügen des Strukturelements (2) mit dem Sichtelement (3) sicherzustellen, wobei die Fügemittel des Strukturelements (2) über einen Auflagebereich (43) mit dem Strukturelement (2) verbunden werden, und die Fügemittel des Sichtelements (3) über einen Ausschnittbereich (42) mit dem Sichtelement (3) verbunden werden, wobei das Sichtelement (3) und das Strukturelement (2) jedes mindestens einen Verklebungsbereich (12-15) aufweisen, wobei mindestens ein Verklebungsbereich (15) des Sichtelements (3) dafür konzipiert ist, mit dem mindestens einem Verklebungsbereich (12) des Strukturelements (2) zusammenzuwirken.

6. Vorläufige Anordnung (1) nach Anspruch 5, **dadurch gekennzeichnet, dass** die Fügemittel des Sichtelements (3) eine Fase (36) umfassen, und die Fügemittel des Strukturelements (2) eine Kerbe (29) umfassen, wobei die Fase (36) dafür geeignet ist, in die Kerbe (29) eingerastet zu werden.

7. Vorläufige Anordnung (1) nach Anspruch 5, **dadurch gekennzeichnet, dass** die Fügemittel des Sichtelements (3) und die Fügemittel des Strukturelements (2) Verschraubungselemente umfassen.

8. Vorläufige Anordnung (1) nach einem der Ansprüche 5 bis 7, **dadurch gekennzeichnet, dass** das Sichtelement (3) und das Strukturelement (2) jede Zentriermittel aufweisen, die dafür konzipiert sind, zusammenzuwirken.

9. Vorläufige Anordnung (1) nach Anspruch 8, **dadurch gekennzeichnet, dass** die Zentriermittel des Sichtelements (3) mindestens eine Bohrung (37) umfassen, und die Zentriermittel des Strukturelements (2) mindestens einen Zentrierzapfen (28) umfassen, der dafür geeignet ist, mit der mindestens einen Bohrung (37) zusammenzuwirken.

10. Vorläufige Anordnung (1) nach einem der Ansprüche 5 bis 9, **dadurch gekennzeichnet, dass** das Sichtelement (3) mindestens eine Federlasche (45-48) umfasst, die dafür konzipiert ist, eine Kraft auf einen Abschnitt des Sichtelements (3) auszuüben.

## Claims

1. A method for manufacturing a plastic automotive part that comprises a structure element (2) and a trim element (3), the manufacturing method further comprising the steps of:
I. Providing a structure element (2) presenting assembly means and at least one bonding area (12);
II. Providing a trim element (3) presenting assembly means and at least one bonding area (15);
III. Depositing a bead of structural glue (14) on at least one bonding area (12) of the structure element (2) and / or at least one bonding area (15) of the trim element (3);
IV. Securing the structure element (2) and the trim element (3) by a mechanical assembly of the assembly means;
V. Polymerizing the bead of structural glue (14);
VI. Cutting the assembly means.

2. The method according to claim 1, for manufacturing a plastic automotive part in which the assembly means present centering means, **characterized in that** step IV of securing the structure element (2) and the trim element (3) by a mechanical assembly of the assembly means comprises steps of:
IV.1. Positioning, with the centering means, the trim element (3) with respect to the structure element (2);
IV.2. Contacting the bonding area (15) of the trim element (3) with the bonding area (12) of the structure element (2);
IV.3. Fastening the structure element (2) with the trim element (3) by the mechanical assembly of the assembly means of the structure element (2) with the assembly means of the trim element (3).

3. The manufacturing method according to claim 1, **characterized in that** step I of providing a structure element (2) presenting assembly means and at least one bonding area (12), comprises a phase of injecting the structure element (2).

4. The manufacturing method according to claim 1, **characterized in that** step II of providing a trim element (3) presenting assembly means and at least one bonding area (15) comprises a phase of injecting the trim element (3), wherein an injection sprue (38) emerges into the assembly means.

5. A Transient assembly (1) for making a plastic automotive part comprising a structure element (2) and a trim element (3), each presenting assembly means cooperating to ensure the assembly of the structure element (2) with the trim element (3), the assembly means of the structure element (2) being linked to the structure element (2) by a support area (43) and the assembly means of the trim element (3) are linked to the trim element (3) by a cutting area (42), each of the trim element (3) and the structure element (2) presents at least one bonding area (12-15), said at least one bonding area (15) of the trim element (3) being designed to cooperate with said at least one bonding area (12) of the structure element (2).

6. The transient assembly (1) according to claim 5, **characterized in that** the assembly means of the trim element (3) comprise a bevel (36) and the assembly means of the structure element (2) comprise a notch (29), the bevel (36) being adapted to be snapped into the notch (29).

7. The transient assembly (1) according to claim 5, **characterized in that** the assembly means of the trim element (3) and the assembly means of the structure element (2) comprise screwing elements.

8. The transient assembly (1) according to any of claims 5 to 7, **characterized in that** each of the trim element (3) and the structure element (2) presents centering means designed to cooperate.

9. The transient assembly (1) according to claim 8, **characterized in that** the centering means of the trim element (3) comprise at least one piercing (37), and the centering means of the structure element (2) include at least one centering pin (28) adapted to cooperate with said at least one piercing (37).

10. The transient assembly (1) according to any of claims 5 to 9, **characterized in that** the trim element (3) comprises at least one elastic tab (45-48) designed to exert a force on a portion of the trim element (3).
